(19) Europäisches Patentamt

European Patent Office

Office européen des brevets

(11) **EP 4 629 599 A1**

(12) **EUROPEAN PATENT APPLICATION**

(43) Date of publication:
**08.10.2025  Bulletin 2025/41**

(21) Application number: **24168438.0**

(22) Date of filing: **04.04.2024**

(51) International Patent Classification (IPC):
**H04L 67/12** [(2022.01)]

(52) Cooperative Patent Classification (CPC):
**H04L 67/12; H04L 63/1425; H04W 12/009;
H04W 12/121; H04W 12/61; H04W 12/63;
H04W 12/65; H04W 12/66**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **ABB SCHWEIZ AG**
**5400 Baden (CH)**

(72) Inventor: **ROSSI, Simone**
**16132 Genova (IT)**

(74) Representative: **Maiwald GmbH**
**Engineering**
**Elisenhof**
**Elisenstrasse 3**
**80335 München (DE)**

(54) **METHOD AND DEVICE FOR DETERMINING A CONTEXT THREAT SCORE**

(57)    This method marks a paradigm shift in our approach to evaluating and responding to security anomalies. At its core, this innovative approach involves assigning threat scores based on the unique context of our industrial environment and based on input data. It is about comprehending the criticality of affected systems, potential operational impacts, and the likelihood of a security violation.

Context holds immense significance in the realm of cybersecurity. What might trigger concern in one environment could be entirely normal in another. Using this method ensuring that threat assessments are precisely tailored to the specific characteristics of the industrial plants.

The enhanced anomaly detection system of the industrial plant based on this method employs advanced algorithms, such as machine learning models, to assign context threat scores to detected anomalies and deviations. These algorithms consider various factors, including the criticality of affected systems, the potential impact on plant operations and the likelihood of an actual security breach. The system utilizes historical data and contextual information to train the models and develop accurate scoring mechanisms. By providing context threat scores, the enhanced anomaly detection system enables operators to prioritize their response efforts based on the severity and potential consequences of each detected anomaly.

The computer-implemented method for determining a context threat score in an industrial plant comprises the following steps. Obtaining, by an obtaining unit, input data from at least one section of the industrial plant, wherein the input data comprises environmental data and/or operational data of the at least one section.

Determining, by a processing unit, a context factor score for the at least one section of the industrial plant based on at least one pre-determined context factor and the input data, wherein the at least one context factor comprises a relation between the input data and context data of the at least one section, wherein the context data comprises at least one context dependent property of the at least one section.

Determining, by the processing unit, a context threat score based on the at least one context factor score.

Figure 1

## Description

### Field of the invention

The present disclosure relates to a computer-implemented method and a device for context threat scoring, in particular in an intrusion detection system of an industrial plant.

### Background

While traditional intrusion detection systems (IDS) in industrial plants often employ methods such as categorizing threats into predefined levels (e.g., low, medium, high) or utilizing a threat scoring mechanism, these approaches have limitations. Threat scoring assigns numerical values or scores to threats based on factors like attacker skill, attack history, target value, and likelihood of success.

Although threat scoring aims to mitigate false positives by assigning lower scores to benign events, it can still result in false negatives, failing to identify actual threats, especially if the scoring criteria are incomplete or new attack methods emerge. Consequently, traditional approaches may lead to a high false alarm rate.

Moreover, threat scores typically provide a static view, lacking dynamic adjustment to changes in the threat landscape. This limitation undermines their effectiveness for continuous risk management.

Therefore, it is essential to assess and promptly address security anomalies to reduce the risk of false positives while evaluating anomaly detection methodologies.

### Summary

The present invention is defined by the subject-matter of the independent claims. Additional features of the invention are presented in the dependent claims.

According to an aspect of the invention, a computer-implemented method for determining a context threat score in an industrial plant comprises the following steps. Obtaining, by an obtaining unit, input data from at least one section of the industrial plant, wherein the input data comprises environmental data and/or operational data of the at least one section.

Determining, by a processing unit, a context factor score for the at least one section of the industrial plant based on at least one pre-determined context factor and the input data, wherein the at least one context factor comprises a relation between the input data and context data of the at least one section, wherein the context data comprises at least one context dependent property of the at least one section.

Determining, by the processing unit, the context threat score based on the at least one context factor score.

The term "context threat score", as used herein, describes a threat score that considers a context of the at least one section of the industrial plant. In other words, the context threat score is a concise and standardized measure that provides an immediate snapshot of the overall threat level of the at least on section of the industrial plant. The context threat score preferably is a number between 0 and 10.

Preferably, the context threat score comprises a numerical value, determined based on the at least one input data and the at least one context factor score. Further preferably, the context threat score reflects a current health status of the at least one section of the industrial plant. The context threat score further preferably comprises a prediction of incoming events, wherein the incoming events comprise system threats, attacks, faults, operational errors and/or anomalies of the section.

The term "environmental data", as used herein, comprises consideration of environmental features of the at least one section, such as temperature or humidity changes, emissions, water usage, energy consumption, waste generation, environmental compliance, and environmental impact assessments. The environmental data is preferably provided by environmental sensors. The environmental data is part of the input data.

The term "operational data", as used herein, comprises information relating to the operation performed by the industrial plant in the at least one section. The operational data preferably comprises any of production metrics, equipment performance, process variables, downtime and reliability, and safety and security. The operational data is preferably provided by operational sensors. The operational data is part of the input data.

The term "context data", as used herein, comprises at least one context dependent property of the at least one section. The context data comprises time factors, operational patterns, user and access aspects, system health and configurations, external influences, security and compliance, integration and communication, environmental and maintenance factors, supply chain and business events and incident response and workflow. In the Industrial plants, sensors, actuators, and various monitoring systems use to collect context data in real-time. This context data is analysed using software systems such as SCADA (Supervisory Control and Data Acquisition) or Industrial IoT (Internet of Things) platforms to gain insights and improve overall plant performance, efficiency, and safety.

Preferably, the time factors comprise time of day, wherein the time of day comprises occurrence during regular operational hours, scheduled maintenance, and/or off-peak periods.

Preferably, the operational patterns comprise operational schedules and historical data wherein operational schedules comprise alignment with expected patterns during different phases of production or operational cycles, and wherein the historical data comprise examination of historical data for similar anomalies and/or patterns.

Preferably, the user and access aspects comprise user activities, access credentials and employee changes, wherein user activities comprise assessment of authorized activities or tasks performed by users, wherein the access credentials comprise detection of changes in user access credentials and/or permissions, and wherein the employee changes comprise consideration of recent changes in personnel and/or employee roles.

Preferably, the system health and configurations comprise system criticality, impact in operations and system configuration changes, wherein the system criticality comprises evaluation of the criticality of affected systems to the overall operation of the industrial plant, wherein the impact in operations comprise assessment of the potential impact on ongoing operations and production processes and wherein the system configuration changes comprise recognition of authorized changes in system configurations.

Preferably, the external influences comprise external events and geographical locations, wherein the external events comprise consideration of external events, such as supplier activities or network maintenance, and wherein the geographical locations comprise assessment of geographical variations in operations or user activities.

Preferably, the security and compliance comprise alarm thresholds, regulatory compliance, security policies, and custom policies, wherein the alarm thresholds comprise comparison of observed values with predefined alarm thresholds, wherein the regulatory compliance comprises evaluation of the impact on compliance with industry or regulatory standards, wherein the security policies comprise consideration of changes in security policies or configurations, and wherein the custom policies comprise recognition of custom policies or rules specific to the industrial plant.

Preferably, the integration and communication comprise integration with other systems and communication patterns, wherein the integration with other systems comprise Correlation with activities in other integrated systems, and wherein the communication patterns comprise detection of deviations in communication patterns, both internal and external.

Preferably, the environmental and maintenance factors comprise device health, environmental conditions, and maintenance logs, wherein the device health comprises correlation with the health status of devices and components within the industrial plant, wherein the environmental conditions comprise consideration of environmental factors, such as temperature or humidity changes, and wherein maintenance logs comprise examination of maintenance logs for recent or ongoing activities.

Preferably, the supply chain and business events comprise supply chain events and business events, wherein the supply chain events comprise evaluation of events in the supply chain, such as changes in suppliers or materials, and wherein the business events comprise consideration of ongoing or upcoming business events that could impact system behaviours.

Preferably, the incident response and workflow comprise incident response protocols and operational workflows, wherein the incident response protocols comprise alignment with predefined incident response protocols and escalation procedures, and wherein the operational workflows comprise recognition of changes in operational workflows or procedures.

The term "context factor", as used herein, comprises a relation between the input data and context data of the at least one section. In other words, the context factor reflects an association of a context factor score to the input data and the context data. This means that the context factor sets the information of the input data in a contextual relation of the context data.

Preferably, the method further comprises determining the context threat score by the processing unit for anomalies detected by the anomaly detection unit.

The essence of context threat scoring lies in its ability to integrate and leverage a myriad of context factors when assessing anomalies within the industrial plant. This process, known as "Contextual Factors Integration", is pivotal in providing a detailed and accurate evaluation of potential security threats.

Contextual Factors Integration further comprises determining a context threat score for security threats and anomalies detected by the system. Preferably, the method further comprises determining a context threat score based on the input data when no anomalies are detected by the system.

The context threat score, now reflecting the nuanced understanding of the situation, guides enhanced intrusion detection system and operator's response. A lower context threat score may trigger a less urgent response, such as additional monitoring, while a higher context threat score could prompt immediate investigation and mitigation efforts, such as system actions and operator actions.

Preferably, if the context threat score is relatively low, the system needs less urgent response and if it is relatively high, the system needs urgent response comprising system actions and/or operator actions.

Preferably, the system actions or the actions of the enhanced intrusion detection system for determining the context threat score comprise context threat score presentation, detailed alert generation, initiate incident response protocols and collaboration with security operation centre (SOC) of the industrial plant.

Preferably, the context threat score presentation comprises presenting the context threat score by the system along with detailed insights into the contributing factors. This presentation aids operators in understanding the severity and potential consequences of the detected anomaly.

Preferably, the detailed alert generation comprises generating a detailed alert providing information about the nature of the anomaly by the system, including specific details about the surge in network traffic during off-peak hours.

Preferably, the initiate incident response protocols comprise initiating automated incident response protocols.

Preferably, the initiate incident response protocols comprise isolating affected components, blocking suspicious IP addresses, and implementing additional security measures to contain the potential threat.

Preferably, the operator actions comprise reviewing system alerts, verifying anomaly and its impact, investigating root cause, adjusting security configurations, coordinating with the system and SOC, and implementing proactive measures.

Preferably, the review system alerts comprise reviewing the alert thoroughly by operators wherein the alert is generated by the system and paying attention to the specific details provided. This includes the context threat score and contributing context factors.

Preferably, the verify anomaly and impact comprises verifying the anomaly by cross-referencing it with other relevant information by operators. They should assess the potential impact on critical systems and operational processes.

Preferably, the investigate root cause comprises a deeper investigation into the root cause of the anomaly is necessary. This involves analysing network traffic patterns, reviewing system logs, and examining user activities during the specified time frame.

Preferably, the adjust security configurations comprise adjusting security configurations based on the findings by operators. This includes updating access controls, refining alarm thresholds, or implementing additional security measures to address the detected anomaly.

Preferably, the coordinate with the system and SOC comprises closely coordinating between system operators with SOC team of the industrial plant. Preferably, the coordinate with the system and SOC comprises sharing finding related to anomalies, validate hypotheses, and formulate an effective response strategy.

Preferably, the implement proactive measures comprise implementing proactive measures by operators to prevent potential threats from materializing. This might involve adjusting security configurations, enhancing access controls, and conducting targeted investigations.

Thus, the provided method provides a context threat score in an industrial plant that considers context data. Thus, a more flexible context threat score considering more than just general input data is provided.

Moreover, based on the context threat score of the section provided in this method, corresponding system action and/or operator action will be performed in response to the anomalies and threats.

In a preferred embodiment, context data comprises time-based considerations, historical data patterns, user activities, system criticality, impact on operations and/or holistic contextual assessments.

Preferably, the time-based considerations comprise meticulous analysis of the time of day. Recognizing that the significance of system activities can vary based on the temporal context.

Preferably, the method evaluates anomalies during regular operational hours, scheduled maintenance windows, or peak production periods differently, considering that system activities can vary throughout the day.

This ensures that the assessment is aligned with the natural rhythm of industrial plant.

Preferably, the historical data patterns comprise comparing past patterns of system behaviour, user interactions and network activities to understand what is typical and expected. By comparing current anomalies with historical data, the determining context threat score can discern whether an observed deviation is a routine occurrence or something more unusual that demands attention.

Preferably, the historical data patterns will be stored within the industrial plant.

Preferably, the user activities comprise understanding the normal behaviours of users within the industrial plant is crucial.

Preferably, the method involves considering the activities of authorized users and how these activities might influence or explain observed anomalies.

For example, a surge in data flow might align with a known and authorized user activity during certain operational phases.

Different components of the industrial plant comprise varying levels of criticality. Preferably, the system criticality comprises integrating the criticality of affected systems into their assessment. An anomaly in a critical system might trigger a different response compared to a similar anomaly in a less critical part of the infrastructure.

Preferably, the impact on operations comprises considering the potential impact of an anomaly on ongoing operations.

For example, an unexpected configuration change during a critical production phase could be deemed more significant than the same change during a period of low activity.

Understanding the potential operational impact adds a layer of depth to threat assessments.

Preferably, the holistic contextual assessment comprises integration of the said context factors which results in a holistic contextual assessment for each anomaly. Rather than evaluating anomalies in isolation, the method looks at the broader circumstances in which they occur. This ensures that threat scores are not assigned based solely on the anomaly itself but on its relevance and significance within the unique operational context of the industrial plant.

Thus, the method provides determining a context threat score in an industrial plant based on time, historical data patterns, user activities, system criticality status, impact on operations and/or holistic contextual assessments. This approach enhances overall plant performance, efficiency, and safety, particularly by refining anomaly detection and predicting incoming events more accurately.

In a preferred embodiment, the context factor score indicates a relevance of the input data.

Preferably, a high context factor score of an input data and context factors indicates hight relevance of the input data in the determining the context factor score.

In an example, the context factor score comprises the relevance of network activity data to determine if a particular event is an anomaly.

In another example, if unusual login attempts are detected during off-hours, the context factor score of those attempts might be high.

Preferably, the context factor score is used to evaluate the relevance of sensor data for failure prediction in system.

In an example, if temperature of a machine is higher than predefined range, the context factor score for the temperature is high, indicating a higher risk of overheating and potential breakdown.

Preferably, the determining the context factor score comprises an evaluation of each detected anomaly, where various context factors contribute to an overall threat score.

Preferably, the context threat scoring comprises any one of a scoring mechanism, weighted analysis, mathematical formula, dynamic contribution and real-time adjustments, context-specific thresholds and operator visibility.

Preferably, the scoring mechanism determining for each context factor a score $S_i$ on a scale of 0 to 10, wherein 0 indicates minimal impact or relevance of the context factor and 10 indicates the maximal impact or relevance of the context factor.

One advantage of the scoring mechanism is that a granular representation of the significance of each context factor in the overall threat assessment is provided.

In a preferred embodiment, each of the at least one context factors is associated with a predetermined context factor weight, and determining the context threat score is based on the at least one context factor weight and the at least one context factor score.

In other words, the context factors are not treated equally, but are weighted between each other.

Preferably, the method employs a weighted analysis, where factors deemed more critical to the security posture of the industrial plant carry a higher weight in the calculation. Each context factor is assigned a weight $W_i$ on a scale of 0 to 1 wherein 0 indicates minimal impact of the context factor and 1 indicates the maximal impact of the context factor.

One advantage of the weighted analysis is that the context threat score reflects the true potential impact on the system's security.

Preferably, the determining the context threat score comprises determining a nominalized threat score. $S_i$ is the score for factor i, $W_i$ is the weight for factor i, and N is the total number of factors. The weighted contribution for each factor is $S_i \times W_i$.

The total weighted contribution is

$$\sum_{i=1}^{N} ( s_i \times w_i )$$

and the sum of weights is

$$\sum_{i=1}^{N} w_i .$$

Therefore, the Normalized Threat Score (NTS) is

$$NTS = \frac{\sum_{i=1}^{N}(s_i \times w_i)}{\sum_{i=1}^{N} w_i}$$

wherein NTS comprises a rage from 0 to 10, it is a concise and standardized measure that provides an immediate snapshot of the overall threat level.

In a preferred embodiment, the method further comprises determining, by a machine learning model, the at least one context factor weight and the at least one context factor score.

In other words, the determining context threat score further comprises using the power of advanced machine learning models, wherein these models are not static, instead, they form an adaptive foundation, continuously learning from historical data within the industrial plant. By understanding the normal patterns of system behaviour, user interactions and network activities, these models establish a baseline against which anomalies are evaluated.

Preferably, the at least one context factor weight and at least one context factor score is determined adaptively. In other words, the context factor weights, and the context factor scores dynamically will be adjusted based on the contextual analysis of context factors.

In an example, the context factor weights, and the context factor scores are determined as follows:

- Time of Day: Score - 2, Weight - 0.1 (during off hours)

- Time of Day: Score - 7, Weight - 0.6 (during peak hours)

Preferably, using the advanced machine learning models for determining the context threat score further comprises different anomaly detection methods, contextualized threat score models, regression model, classification model (logistic regression), decision tree model and random forest model.

Another advantage of this method is decreasing the risk of false positives. To address the challenge of false positives, the system utilizes intelligent algorithms and machine learning models that adapt to the specific context of industrial control systems. The system employs techniques such as adaptive thresholding, outlier detection and anomaly filtering. By dynamically adjusting the thresholds and considering the operational conditions of the plant, the system can differentiate between genuine threats and harmless anomalies resulting from temporary changes in plant operations. This adaptive approach minimizes unnecessary interruptions and false alarms, ensuring that operators can focus their attention on genuine security threats effectively.

Preferably, the anomaly detection methods comprise Z-Score, which is used for Univariate anomaly detection, Mahalanobis distance, which is used multivariate anomaly detection, isolation forest, which is used for anomaly detection, particularly effective when anomalies are rare and well-separated, one-class SVM which is used anomaly detection when the majority of data is normal.

Depending on the characteristics of the data and the specific requirements of the anomaly, the system uses the mentioned anomaly detection methods.

Preferably, the context threat score models comprise determining a Normalized Threat Score (NTS), wherein if X is the feature vector representing context factors, $\theta$ is the model parameters, and $h_\theta(X)$ be the hypothesis function, wherein the Threat Score TS, output by the machine learning model, is $TS = h_\theta(X)$ and wherein the Normalized Threat Score is calculated by

$$NTS = \frac{TS}{\sum_{i=1}^{N} W_i}.$$

Preferably, the threat score comprises using a variety of machine learning models.

For example, the threat score uses regression or classification models, depending on the nature of the problem.

Preferably, the regression model comprises using a linear model to calculate the threat score, wherein the linear model is $TS = \theta_0 + \theta_1 X_1 + \ldots + \theta_N X_N$, where $\theta_0, \theta_1 \ldots \theta_N$ are the model parameters.

Preferably, the classification model comprises using a logistic regression model, wherein the logistic regression model is

$$TS = \frac{1}{1 + e^{-(\theta_0 + \theta_1 X_1 + \ldots + \theta_N X_N)}}$$

wherein $\theta_0, \theta_1, \ldots, \theta_N$ are the model parameters.

Preferably, the decision tree model comprises obtaining the threat score based on the path through the tree that the feature vector X takes.

Preferably, the random forest model comprises determining the threat score based on an aggregation of the scores from multiple decision trees

$$TS = \frac{1}{N}\sum_{i=1}^{N} h_{\theta_i}(X)$$

wherein $h_{\theta_i}(X)$ is the Threat Score from the $i^{th}$ tree, and N is the number of trees.

In a preferred embodiment, the machine learning model is based on a Large Language Model, LLM.

Preferably, the LLM is based on Natural Language Processing, NLP, techniques.

Thus, using NLP techniques, the at least one context factor weight and the at least one context factor score, can be determined.

Thus, the system is trained and can be used to determine the at least one context factor weight and the at least one context factor score.

Preferably, the threat scoring mechanism by the processing unit is part of a continuous learning loop. As the system encounters new scenarios, the scoring mechanism adapts in real-time, refining its understanding and ensuring that the threat scores remain current and accurate.

In a preferred embodiment, the machine learning model comprises a regression model, a classification model, a decision tree model and/or a random forest model.

Preferably, a regression approach is used, and the machine learning model calculate the threat score using a linear model.

Preferably, the regression model comprises using the linear model to calculate the threat score, wherein the linear model is $Ts = \theta_0 + \theta_1 X_1 + ... + \theta_N X_N$, where $\theta_0, \theta_1 ... \theta_N$ are the model parameters.

Preferably, a decision tree model is used, and the machine learning model determines the threat score based on the path through the tree that the feature vector X takes.

Preferably, the decision tree model is a non-parametric supervised learning method used for classification and regression.

Preferably, by using the decision tree, the machine learning model can be trained to predict anomalies.

In a preferred embodiment, the method further comprises providing, by an outputting unit, the context threat score of the at least one section to a user.

Preferably, the outputting unit acts as an interface between the system and the user and provides the at least context threat score of the at least one section to the user.

Preferably, the threat score comprises a rage from 0 to 10.

Preferably, by the outputting unit, the context threat score and a status of the section is provided, wherein the status of the section comprises the current health status of the section.

Preferably, the current health status the section status comprises high-risk status, which needs an urgent action (system and/or operator actions), and low risk status, which does not need urgent action.

In a preferred embodiment, the method further comprises receiving an anomaly detection signal, by the processing unit, from an anomaly detection unit, wherein the anomaly detection signal indicates an anomaly in the at least one section. Additionally, the method comprises evaluating the detected anomaly based on the determined context threat score of the at least one section.

Preferably, the anomaly detection unit provides the processing unit anomaly detection signals.

Preferably, the obtained anomaly detection signal comprises information about the at least one section of the industrial plan where the anomaly occurred and/or the type of anomaly.

Preferably, the method further comprises determining the threat score, by the processing unit, for the section where the anomaly occurred.

This allows to detect false positives of the anomaly detection unit. In other words, the detected anomaly of the anomaly detection unit is set into context based on the context threat score and it is evaluated if the detected anomaly in fact is an anomaly in the present context of the at least one section.

In a preferred embodiment, the evaluating the detected anomaly comprises a false positive anomaly detection.

Preferably, the evaluation comprises using intelligent algorithms and/or machine learning models that adapt to the specific context of the at least one section of the industrial plant.

Preferably, the evaluating comprises employing techniques such as adaptive thresholding, outlier detection and anomaly filtering.

Preferably, the evaluating further comprises detecting real anomalies (and/or real threats) and false positives, wherein the false positives are harmless anomalies and/or harmless threats, which are resulting from temporary changes in plant operations.

Preferably, detecting the false positives by dynamically adjusting the thresholds and based on the operational conditions of the industrial plant, is provided.

Preferably, detecting the false positives by evaluating the context factor score of the section, is provided.

One advantage of this adaptive approach is minimizing unnecessary interruptions and false alarms and ensuring that operators can focus their attention on genuine security threats effectively.

In a preferred embodiment, the method is performed in real-time.

Preferably, the method performed continuously to capture and analyse the at least one section of the industrial plant, command requests, and system logs in real-time.

One advantage of this approach is allowing immediate visibility into system activities and potential security events. Additionally, threat scores for each section will be determined in real-time, enabling the generation of real-time alerts.

Another advantage of this approach is real time evaluating the detected anomaly which caused a real time false positive anomaly detection.

Preferably, the dynamic contribution and real-time adjustments comprises determining dynamically the overall context threat score of the at least one section of the industrial plant, wherein the score $S_i$ and the weight $W_i$ assigned to each context factor.

For example, if a detected anomaly occurs during a routine maintenance window, "Time of Day" contribution might be minimal, decreasing the overall threat score. Conversely, anomalies occurring during operational hours will have a greater contribution from this context factor, thus presenting a potentially higher overall threat score.

Preferably, the adaptive analysis doesn't rely on generic thresholds.

Preferably, the threat scoring further comprises establishing context-specific thresholds for each context factor of the at least one section of the industrial plant, wherein the context-specific thresholds comprises determining a pre-defined threshold for each of the context factor scores and each of context factor weights, wherein If the context factor score and/or context factor weight exceed the pre-defined threshold, it indicates a threat associated with this context factor that requires an urgent response.

One advantage of this approach is ensuring that the threat scores are precisely aligned with the operational complexity of the industrial environment and with the input data.

Preferably, the operator visibility comprises offering operators a transparent and comprehensible view of the severity of the detected anomaly.

One advantage of this transparency is enabling operators to make informed decisions in response to potential security threats.

In a preferred embodiment, the at least one section relates to a special area of the industrial plant or a functional section of the industrial plant.

Preferably the special area of the industrial plant comprises a distinct portion or zone within the industrial plant.

For example, in a chemical manufacturing plant, there might be special areas dedicated to hazardous material storage, reaction vessels for specific chemical processes, or areas equipped for waste treatment. These areas are often designed with special infrastructure, equipment, and safety measures tailored to the unique requirements of the processes carried out within them.

Preferably, the functional section of the industrial plant comprises a specific division within the industrial plant based on a particular parameter, an operation, a particular function or set of functions. For example, the functional section comprises a hydraulic control system extending through the industrial plant.

For example, within an industrial plant, a functional section can be established to monitor the pressure of all turbines. Through this setup, operators can efficiently monitor pressure information and the status of all terminals associated with the turbines.

According to an aspect of the invention, a device for determining a context threat score in an industrial plant, wherein the device is configured to perform the method, as described herein.

According to an aspect of the invention, a device for determining a context threat score in an industrial plant comprises the following. An obtaining unit, configured to obtain input data from at least one section of the industrial plant, wherein the input data comprises environmental data and/or operational data of the at least one section. A processing unit, configured to determine a context factor score for the at least one section of the industrial plant based on at least one pre-determined context factor and the input data, wherein the at least one context factor comprises a relation between the input data and context data of the at least one section, wherein the context data comprises at least one context dependent property of the at least one section. The processing unit, further configured to determine a context threat score based on the at least one context factor score.

According to an aspect of the invention, an anomaly detection system in an industrial plant, wherein the system comprises the device for determining a context threat score as described herein.

According to an aspect of the invention, a computer program product, wherein when the computer program product runs on a computer, the computer is enabled to perform the method, as described herein.

According to an aspect of the invention, a computer-readable storage medium comprising computer instructions, wherein when the computer instructions are run on a computer, the computer is enabled to perform the method, as described herein.

**Brief description of the drawings**

Exemplary embodiments of the invention will be described in the following with reference to the accompanying drawings:

Fig.1 illustrates a schematic diagram of a device for determining the context threat score according to an embodiment of the application.

Fig. 2 illustrates a schematic diagram of collaboration the device with security operation centre (SOC) according to an embodiment of the application.

Fig. 3 illustrates a flowchart of determining the context threat score method according to an embodiment of the application.

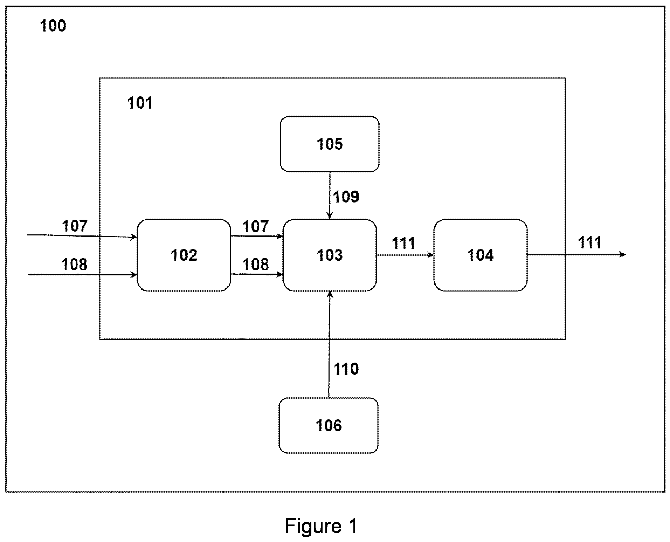

Fig. 1 illustrates a schematic diagram of a device for determining the context threat score by a device 101 for determining a context threat score in an industrial plant in an enhanced anomaly detection system 100 according to an embodiment of the application. The anomaly detection system 100 comprises the device 101 and an anomaly detection unit 106. The device 101 is configured to determine based on the input data 107, context data 108 and context factors 109 a context threat score 111. Further The anomaly detection unit 106 is configured to detect an anomaly. The device 101 is configured to determine based on the context threat score 111 whether the anomaly is dangerous for the system 100.

Preferably, the anomaly detection system 100 is an intruder detection system.

The device 101 comprises an obtaining unit 102, a processing unit 103, preferably an outputting unit 104 and a database unit 105. The obtaining unit 102 obtains the input data 107 and the context data 108.

Preferably, the processing unit 103 receives an anomaly detection signal 110 from the anomaly detection unit 106, wherein the anomaly detection signal 110 indicates an anomaly in the at least one section. Additionally, the method comprises evaluating the detected anomaly based on the determined context threat score 111 of the at least one section.

Preferably, the processing unit 103 determines the context threat score 111 for the at least one section without receiving an anomaly detection signal 110 from the anomaly detection unit 106.

In another embodiment, the processing unit 103 determines the context threat score 111 for the anomaly that has been detected by the anomaly detection unit 106.

The processing unit 103 will determine the context threat score 111 and obtained anomaly signals 110 from anomaly detection unit 106. The output data 111 will be outputted by the outputting unit 104 for at least one user, wherein the output data 111 is the context threat score 111.

In an example according to Fig. 1, the anomaly detection unit 106 sends the processing unit 103 an anomaly detection signal 110 regarding low pressure at terminal A of turbine 1 on 29.01 at 12:10 p.m. The processing unit 103 determines the context threat score 111 and provides an output data 111 for operators, indicating that a service will be performed between 12 p.m. to 2 p.m. on 29.01, concluding that the anomaly is a false positive.

In an example according to Fig. 1, the anomaly detection system 100 monitors actively the industrial plant, system logs and user activities. The anomaly detection unit 106 detects a sudden and significant surge in data flow within the industrial plant. Traditionally, this might trigger an alarm as it could be interpreted as a potential security violation.

In this example a traditional intrusion detection system without context threat scoring, might treat this surge as a high-level threat without considering the broader context. But an enhanced intrusion detection system for example the anomaly detection system 100 equipped with the device 101 for determining context threat score 111, takes a more sophisticated approach. It evaluates this anomaly 110 in the context of the industrial plant, considering factors such as:

- The time of day: Is this surge occurring during a scheduled maintenance window?

- Historical data: Have similar surges happened before during routine operations?

- User activities: Are there authorized activities that could explain the surge?

- Operational schedules: Does this align with expected patterns during regular production cycles?

Additionally, an adaptive evaluation started, and the context threat score 111 dynamically adjusts based on the analysis of context factors 109. If the surge aligns with expected patterns and poses no risk to critical systems, the context threat score 111 is lowered. Conversely, if the surge occurs at an unexpected time or in a manner inconsistent with normal operations, the context threat score 111 is raised.

The processing unit 103 determines a context factor score 111 for at least one context factor 109, wherein each of the at least one context factors 109 is associated with a predetermined context factor weight and determining the context threat score 111 is based on the at least one context factor weight and the at least one context factor score.

The context factor scores 111 have a scale of 0 to 10 and the context factor weights have a scale of 0 to 1.

Below are the context factors 109 and their corresponding scores have been determined the processing unit 103:

Time Factors:

- Time of Day: Score - 7, Weight - 0.1 (Occurrence during off-peak hours)

Operational Patterns:

- Operational Schedules: Score - 6, Weight - 0.15 (Deviation from expected patterns)

- Historical Data: Score - 8, Weight - 0.1 (No similar anomalies in historical data)

User and Access Aspects:

- User Activities: Score - 7, Weight - 0.15 (Unusual user activities during off-peak hours)

- Access Credentials: Score - 5, Weight - 0.1 (No detected changes in access credentials)

- Employee Changes: Score - 6, Weight - 0.1 (Recent changes in personnel)

System Health and Configurations:

- System Criticality: Score - 9, Weight - 0.2 (Highly critical system affected)

- Impact on Operations: Score - 7, Weight - 0.15 (Potential disruption to ongoing operations)

- System Configuration Changes: Score - 4, Weight - 0.1 (No authorized changes)

External Influences:

- External Events: Score - 3, Weight - 0.05 (No external events detected)

- Geographical Locations: Score - 5, Weight - 0.05 (No geographical variations observed)

Security and Compliance:

- Alarm Thresholds: Score - 8, Weight - 0.3 (Exceeds predefined alarm thresholds)

- Regulatory Compliance: Score - 6, Weight - 0.1 (Potential impact on compliance)

- Security Policies: Score - 7, Weight - 0.1 (Recent changes in security policies)

- Custom Policies: Score - 5, Weight - 0.1 (No violations of custom policies)

Integration and Communication:

- Integration with Other Systems: Score - 6, Weight - 0.1 (Correlation with anomalies in integrated systems)

- Communication Patterns: Score - 7, Weight - 0.1 (Deviation in communication patterns)

Environmental and Maintenance Factors:

- Device Health: Score - 8, Weight - 0.15 (Healthy devices, no issues)

- Environmental Conditions: Score - 5, Weight - 0.05 (Normal environmental conditions)

- Maintenance Logs: Score - 6, Weight - 0.1 (Recent maintenance activities)

Supply Chain and Business Events:

- Supply Chain Events: Score - 4, Weight - 0.05 (No changes in the supply chain)

- Business Events: Score - 6, Weight - 0.1 (Ongoing business events) Incident Response and Workflow:

- Incident Response Protocols: Score - 7, Weight - 0.1 (Alignment with predefined protocols)

- Operational Workflows: Score - 5, Weight - 0.05 (No significant changes in workflows)

Based on the above context factors and their corresponding scores the final calculation will be determined by the processing unit 103.

First, the processing unit 103 determines the weighted contribution:

- 

Total weighted contribution = (7*0.1) + (6*0.15) + (8*0.1) + (7*0.15) + (5* 0.1) + (9*0.2) +(7*0.15) + (4*0.1) + (3*0.05) + (5*0.05) + (8*0.3) + (6* 0.1) + (7*0.1) + (5*0.1) + (6*0.1) + (8*0.15) + (5*0.05) + (6*0.1) + (4* 0.05) + (7*0.1) + (5*0.1) = 6.935

Next, the processing unit 103 determines sum of weights:

- 

Sum of Weights = 1

Finally, the processing unit 103 determines normalized context threat score:

- 

Normalized context threat score = Total weighted contribution / Sum of weights = 6.935/1 = 6.935.

In this example, the calculated normalized context threat score is 6.935, falling within the medium-high range on a scale of 0 to 10. This suggests a notable level of concerning regarding the detected anomaly, triggering the responses from both system 100 and the operator (system actions and operator actions).

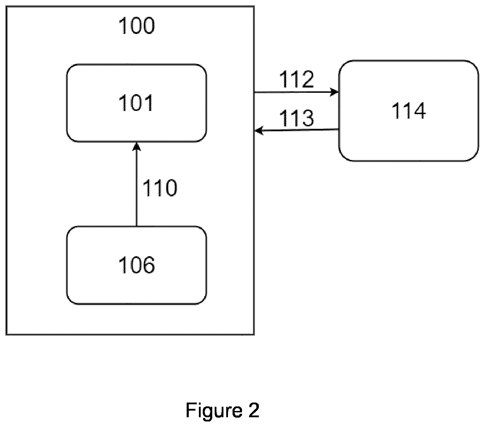

Fig. 2 illustrates a schematic diagram of collaboration the device with security operation centre 114 (SOC) according to an embodiment of the application, wherein the collaboration with SOC 114 comprises integrating the system 100 with the SOC 114 of the industrial plant. Detailed information 112 about the anomalies and the threat context scores will be provided to the SOC 114 for collaborative analysis and efficient incident handling.

SOC 114 communicates with the system 100 and provides information 113 regarding security policies and rules and/or remediation recommendations.

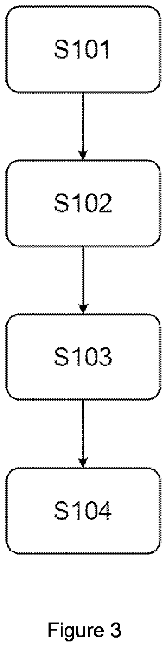

Fig. 3 is a flowchart of a determining context threat score method according to an embodiment of the application.

The method provided in this embodiment of this application includes the following steps.

In the first step S101 by an obtaining unit 102, input data 107 from at least one section of the industrial plant, will be obtained, wherein the input data 107 comprises environmental data and/or operational data of the at least one section.

In the second step S102 by a processing unit 103, a context factor score 111 for the at least one section of the industrial plant based on at least one pre-determined context factor 109 and the input data 107, will be determined, wherein the at least one context factor 109 comprises a relation between the input data 107 and context data 108 of the at least one section, wherein the context data 108 comprises at least one context dependent property of the at least one section.

In the third step S103 by the processing unit 103, a context threat score 111 based on the at least one context factor score 111, will be determined.

In the third step S104 by an outputting unit 104, the at least context threat score 111 of the at least one section to a user will be provided, wherein the output unit 104 is an interface between operators and the device 101. Through the outputting unit 104, operators obtain the context threat score 111 of the at least one section of the industrial plant.

Preferably, the outputting unit 104 provides further a status of the at least on section of the industrial plant, wherein the system status comprises the status of the section based on the context threat score 111.

Preferably, the outputting unit 104 provides the context threat score 111 and the current health status of the section, wherein the current health status comprises high-risk status and low risk status.

In an example, if the context threat score 111 of the section is less than 5, the status is low-risk and if the context threat score 111 is equal or more than 5, the status is high-risk.

## Claims

1. A computer-implemented method for determining a context threat score in an industrial plant, the method comprising:

   obtaining (S101), by an obtaining unit (102), input data (107) from at least one section of the industrial plant, wherein the input data (107) comprises environmental data and/or operational data of the at least one section;
   determining (S102), by a processing unit (103), a context factor score for the at least one section of the industrial plant based on at least one pre-determined context factor (109) and the input data (107), wherein the at least one context factor (109) comprises a relation between the input data (107) and context data (108) of the at least one section, wherein the context data (108) comprises at least one context dependent property of the at least one section;
   determining (S103), by the processing unit (103), the context threat score (111) based on the at least one context factor score.

2. The method according to the claim 1, wherein the context data (108) comprises time-based considerations, historical data patterns, user activities, system criticality, impact on operations and/or holistic contextual assessments.

3. The method according to claim 1 or 2, wherein the context factor score indicates a relevance of the input data (107).

4. The method according to any one of the preceding claims,
   wherein each of the at least one context factors (109) is associated with a predetermined context factor weight; and
   determining the context threat score (111) is based on the at least one context factor weight and the at least one context factor score.

5. The method according to claims 3 or 4, the method further comprises:
   determining, by a machine learning model, the at least one context factor weight and the at least one context factor score.

6. The method according to claim 5,
   wherein the machine learning model comprises a regression model, a classification model, a decision tree model and/or a random forest model.

7. The method according to any one of the preceding claims, the method further comprises:
   Providing (S104), by an outputting unit (104), the context threat score (111) of the at least one section to a user.

8. The method according to the any one of the preceding claims, wherein the method further comprises:

   receiving an anomaly detection signal (110), by the processing unit (103), from an anomaly detection unit (106), wherein the anomaly detection signal (110) indicates an anomaly in the at least one section; and
   evaluating the detected anomaly based on the determined context threat score (111) of the at least one section.

9. The method according to claim 8,
   wherein evaluating the detected anomaly comprises a false positive anomaly detection.

10. The method according to any one of the preceding claims, wherein the method is performed in real-time.

**11.** The method according to any one of the preceding claims, wherein the at least one section relates to a special area of the industrial plant or a functional section of the industrial plant.

**12.** A device (101) for determining a context threat score in an industrial plant, wherein the device is configured to perform the method according to any one of the claims 1 to 11.

**13.** An anomaly detection system (100) in an industrial plant, wherein the system (100) comprises the device (101) for determining a context threat score (111) according to claim 12.

**14.** A computer program product, wherein when the computer program product runs on a computer, the computer is enabled to perform the method according to any one of the claims 1 to 11.

**15.** A computer-readable storage medium, comprising computer instructions, wherein when the computer instructions are run on a computer, the computer is enabled to perform the method according to any one of the claims 1 to 11.

Figure 1

Figure 2

```
┌─────────────┐
│             │
│    S101     │
│             │
└──────┬──────┘
       │
       ▼
┌─────────────┐
│             │
│    S102     │
│             │
└──────┬──────┘
       │
       ▼
┌─────────────┐
│             │
│    S103     │
│             │
└──────┬──────┘
       │
       ▼
┌─────────────┐
│             │
│    S104     │
│             │
└─────────────┘
```

Figure 3

Europäisches
Patentamt

European
Patent Office

Office européen
des brevets

# EUROPEAN SEARCH REPORT

**Application Number**

EP 24 16 8438

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/342988 A1 (BRUNZA SCOTT [US] ET AL) 27 October 2022 (2022-10-27)<br>* paragraph [0007] - paragraph [0008] *<br>* paragraph [0035] *<br>* paragraph [0044] - paragraph [0050] *<br>- - - - - | 1-15 | INV.<br>H04L67/12 |
| X | US 2017/230410 A1 (HASSANZADEH AMIN [US] ET AL) 10 August 2017 (2017-08-10)<br>* paragraph [0008] - paragraph [0011] *<br>* paragraph [0021] - paragraph [0024] *<br>- - - - - | 1-15 | |

**TECHNICAL FIELDS SEARCHED (IPC)**

H04L
G06F

The present search report has been drawn up for all claims

| Place of search | Date of completion of the search | Examiner |
|---|---|---|
| The Hague | 6 September 2024 | Lázaro, Marisa |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 16 8438

This annex lists the patent family members relating to the patent documents cited in the above-mentioned European search report.
The members are as contained in the European Patent Office EDP file on
The European Patent Office is in no way liable for these particulars which are merely given for the purpose of information.

06-09-2024

| Patent document cited in search report | Publication date | Patent family member(s) | Publication date |
|---|---|---|---|
| US 2022342988 A1 | 27-10-2022 | US 2022342988 A1<br>WO 2022225581 A1 | 27-10-2022<br>27-10-2022 |
| US 2017230410 A1 | 10-08-2017 | AU 2017200941 A1<br>EP 3206368 A1<br>US 2017230410 A1 | 24-08-2017<br>16-08-2017<br>10-08-2017 |

EPO FORM P0459

For more details about this annex : see Official Journal of the European Patent Office, No. 12/82